# EUROPEAN PATENT APPLICATION

(11) **EP 1 852 015 A1**
(43) Date of publication of application: **07.11.2007**
(21) Application number: 06113572.9
(22) Date of filing: 05.05.2006
(51) Int. Cl.: A01K 61/00

(54) **System for growing and harvesting seed mussels, as well as floatable body for use in such system**

(71) Applicant: Lenger, Simon August, 4401 LA Yerseke (NL); Loonstra, Tjalling, 1778 KN Westerland (NL)
(72) Inventor: Lenger, Simon August, 4401 LA Yerseke (NL); Loonstra, Tjalling, 1778 KN Westerland (NL)
(74) Representative: van Westenbrugge, Andries

(57) **Abstract**

A system for growing and harvesting seed mussels comprises at least one spool (9), a bendable elongate growing member (12) wound on said spool (9) as well as supporting means (1) for holding the spool (9) submerged in a body of water (18). Said supporting means (1) comprise a floatable body (1) which may be submersible. Each spool (9) can be supported by the floatable body (1) in a position wherein the axis of the spool (9) is generally vertically oriented.

## Description

The invention is related to a system for growing and harvesting seed mussels, comprising at least one spool, a bendable elongate growing member wound on said spool as well as supporting means for holding the spool submerged in a body of water.

Such a system is known from EP-A-1588610. The advantage of such system is that a fair amount of e.g. a rope or wire can be wound around the spool, which means that in a rather restricted area, and even in a relatively shallow water, a single length of rope can be effectively applied for growing seed mussels. Moreover, the handling of the rope or wire both above and on the laughter is greatly simplified, as at those stages it remains on the spool.

The rope or wire in question can be applied in several ways, but preferably in extends in a screwlike fashion around the spool. Preferably, neighbouring windings of the rope or wire in the spool enclose an open space, in such a way that as much space as possible is available for the growth of the seed mussels. Thus, the seed mussels can grow around the full circumference of the rope or wire in such a way that a great amount of seed mussels can be obtained. Furthermore, the spool can comprise an axial hollow central shaft, in such a way that the spool can be conveniently mounted on a vertically oriented mooring means, such as a post which is founded in the bottom of the body of water in question. In such case, the hollow central shaft of the spool can be simply slipped over the post upon positioning or retrieving the spool.

Although such system yields good results in shallow water, nevertheless improvements are possible. It should be borne in mind that shallow waters, in particular coastal waters, are often subject to specific regulations concerning safety and the environment. Moreover, in certain cases the body of water in question can become covered with a layer of ice. As a result of these specific circumstances, it appears to be less desirable to use fixed mooring means, such as posts founded in the bottom of the body of water, for the spools in question. Of course it is possible to position the posts temporarily, which means that they would have to be removed after harvesting the seed mussels. However, such a way of action is less desirable as it would involve a considerable amount of additional work and expenses.

The object of the invention is therefore to provide a system as described before, which is however more flexible as to the capabilities of mooring the spools in question. Said object is achieved by providing supporting means which comprise a floatable body. According to the invention, the spools in question are now no longer supported on the bottom of the body of water, but by means of the floatable body. Such floatable body provides several specific advantages, by means of which the drawbacks as discussed before of the traditional way of mooring by means of posts founded in the bottom of the body of water, can be circumvented.

First of all, the activities related to hammering the posts into the bottom of the body of water are no longer are necessary. Consequently, they need no longer be removed either. Instead, in case for instance ice would form on the surface of the body of water, the floatable body together with the spools can be towed away to a safer environment. Moreover, the bottom of the body of water in question can remain in its natural, undisturbed condition, which is a great advantage in particular in those cases wherein the environment is of great concern.

Removing the floatable body by towing away is however only one of the possibilities which are offered by the system according to the invention. Additionally, the floatable body can be removed out of the danger zone, in particular the surface of the body of other, by making said floatable body submersible. In that case the floatable body does not need to be towed away, but can be simply moved to a somewhat deeper position or can even be placed onto the bottom of the body of water.

The floating body according to the invention offers advantages, which were hitherto not achievable by means of the fixed mooring posts. For instance, in case in an emergency situation the body of water in which the floatable body is positioned, has become polluted, the spools in question together with the rope or wire and the growing seed mussels can be moved away as well. Either this is done before the pollution reaches the location of the floatable body, or, in case no time is left before the pollution reaches said location, it is still possible to move the system to a clean location afterwards so as to purify the seed mussels in question.

The spools in question are preferably supportable by the floatable body in a position wherein the axis of the spool is generally vertically oriented. To that end, the floatable body may comprise upright posts. In this connection, each spool has a hollow central shaft which is slidable over the upright post.

The floatable body may be carried out in several ways, but preferably has tubular structure. Such tubular structure allows the water to flow in and out freely, which is a prerequisite for a proper growth of the seed mussels on the wire or rope of the spools which are accommodated within said floatable body. In this connection, the floatable body may comprise a series of generally horizontally oriented support tubes, said support tubes bearing uprights onto which a respective spool can be located. Said support tubes are preferably generally parallel and/or aligned, and are interconnected by regularly spaced transverse tubes.

With the aim of providing a proper are floating capability, the floatable body preferably comprises floating tubes each having a floating chamber for providing a floating capability. The floating capability of the floating tubes may be controllable in such a way that the height of the floatable body with respect to the surface of the body of water can be regulated. In particular the floating tubes may be fillable with water. It should be borne in mind that the spools in question form a load, the magnitude of which may differ dependent on the number of spools installed in the floating body. In all cases, it should be ensured that the spool, and in particular the rope or wire which is wound onto the spool, can be kept in a fully submerged condition so as to enable the growth of the seed mussels. Depending on the number of spools therefore, a specific abroad draft is necessary to keep the floating body together with the spools just underneath the surface of the body of water. It is not always necessary to choose such position, but preferably the floating body is positioned in such a way that daylight may reach the seed mussels.

Moreover, the mass and therefore the weight of the spools and wire will increase with a growing number of seed mussels and also with the growth of the seed mussels itself. Also for this purpose it is desirable to influence the floating capability of the floatable body, so as to maintain the desired position in the body of water just beneath the surface thereof Furthermore, as discussed before, by influencing the floating capability the system can be submerged fully onto the bottom of the body of water, which is desirable in cases wherein ice is forming on the surface of the body of water.

In this connection, control means may be provided for controlling the floating capability of the floating tubes. These control means can valves and pumps for introducing and/or removing water from the floating chambers of the floating tubes.

Preferably, the floating tubes are assembled into a rectangular or square frame. Said floating tubes are best positioned at the top of the floating body.

Furthermore, the invention is related to a submersible floatable body for a system as described before, comprising supporting means for holding a spool provided with a bendable elongate member. The floatable body also comprises supporting means which are carried out as upright posts, onto which the spools can be accommodated.

Reference is made to the state-of-the-art as according to NL-C-1023888. This publication discloses a self regulating floatable body for growing mussels. Onto said body, ropes or wires are connected which loosely hanging into the body of water. No reference is made to the step of accommodating the ropes or wires on a spool, which makes the system rather vulnerable with respect to water flows and intemperate weather. Moreover, it is difficult to harvest the mussels in question from such loosely hanging ropes or wires.

A further state-of-the-art for growing shellfish is disclosed in WO-A-9937141. In this connection, a culture tank accommodated within a floating barge is used and which comprises a multitude of chambers for accommodating a number of frames. The frames each comprise a number of tables or culture plates, on which the shellfish are accommodated. No reference is made to a spool with wire or rope wound onto it, which makes this culture tank not suitable for growing and harvesting seed mussels.

Furthermore, US-A-6044798 discloses a floating aquaculture apparatus having floatable modules from which rearing units are suspended which contain marine animals. No reference is made to a spool provided with the wire rope, which means that neither the system is suitable for growing and harvesting seed mussels.

From EP-A-1396189, a raft is known for cultivating bivalves. From said raft, a number of the ropes is a vertically suspended into the body of water carrying the raft. Such a system is rather vulnerable as to intemperate weather, and moreover the fairly large multitude of ropes is cumbersome when it comes to harvesting the seed mussels in question.

The invention will now be described further with reference to an embodiment of the system according to the invention as shown in the figures.
Figure 1 shows a perspective view of the system according to the invention.
Figure 2 shows and enlarged detail of the system according to figure 1.
Figure 3 shows a spool of the system according to figure 1, lifted on board a vessel.

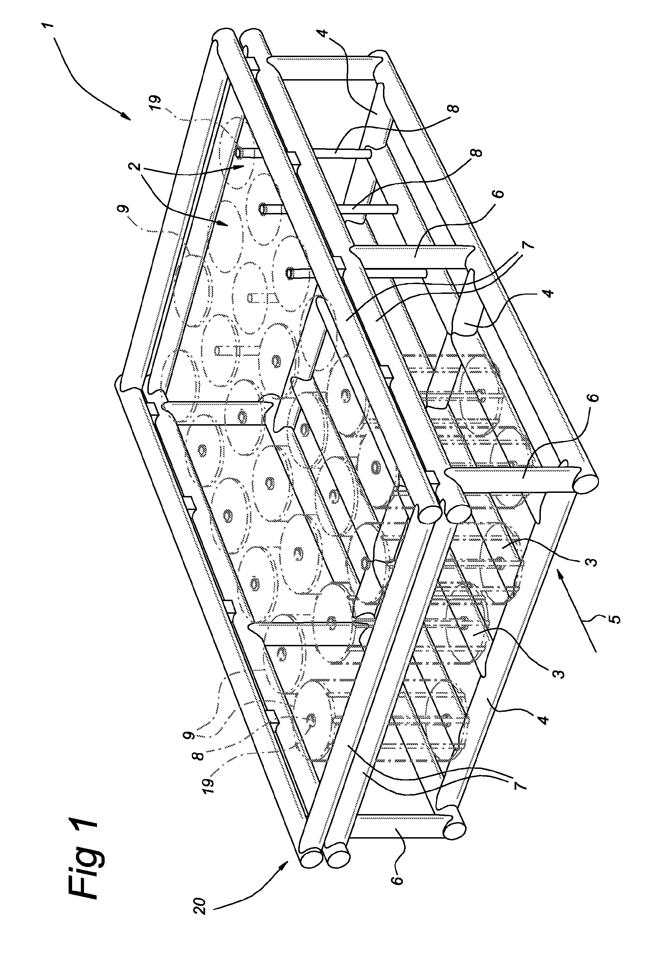

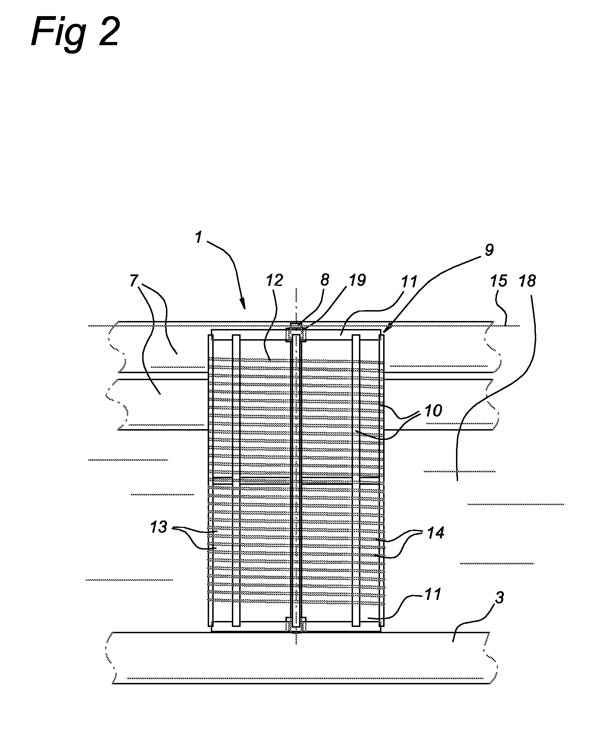

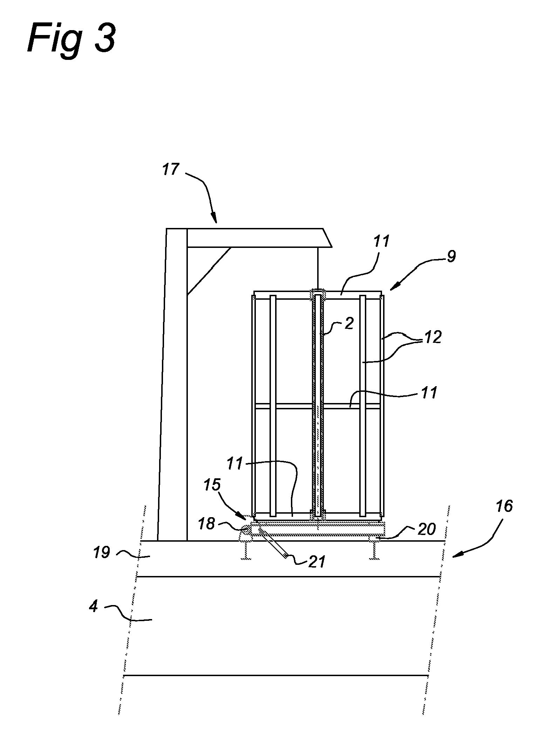

The system as shown in figure 1 comprises a floatable body 1, as well as a plurality of spools 2. Said spools 2 are accommodated within the confines of the floatable body 1, which consists of the tubes as will be discussed with reference to the figures 2 and 3. Said floatable body 1 in the first place comprises a number of generally horizontally oriented support tubes 3, which are arranged next to each other and in line of each other. By means of the transverse tubes 4, these support tubes 3 are interconnected.

The support tubes 3 and the transverse tubes 4 constitute the bottom 5 of the floating body 1, which furthermore comprises the upright tubes 6. On top of the upright tubes 6, floating tubes 7 are arranged which each have a floating chamber for providing the floating capability of the floating body 1. The floating tubes 7 together form a rectangular frame 20.

Upright posts 8 are mounted on the upper side of the support tubes 3, onto which upright posts 8 the spools 9 have been accommodated. These spools 9 comprise a frame of parallel bars 10 and transverse bars 11. Around each spool 9, a wire or rope 12 has been wound, leaving free open spaces 13 between the individual windings of 14, as shown in figure 2. The floating body 1 together with spools 9 floats in the top part of a body of water 18, which has an upper level 15.

With the aim of harvesting the seed mussels which are grown on to the wire 12, the spool 9 is lifted onboard a vessel 16 by means of a crane 17, as shown in figure 3. Subsequently, the seed mussels are harvested in a known way on board said vessel 16. In this connection, reference is made to EP-A-1588610, from which the system comprising such spool mounted wire is known.

## Claims

1. System for growing and harvesting seed mussels, comprising at least one spool (9), a bendable elongate growing member (12) wound on said spool (9) as well as supporting means (1) for holding the spool (9) submerged in a body of water (18), **characterised in that** the supporting means comprise a floatable body (1).

2. System according to claim 1, wherein the floatable body (1) is submersible.

3. System according to claim 1 or 2, wherein each spool (9) is supportable by the floatable body (1) in a position wherein the axis of the spool (9) is generally vertically oriented.

4. System according to claim 3, wherein the floatable body (1) comprises at least one upright post (8), each spool (9) having a hollow central shaft (19) which is slidable over an upright post (8).

5. System according to any of the preceding claims, wherein the floatable body (1) comprises a tubular structure.

6. System according to claim 5, wherein the floatable body (1) comprises a series of generally horizontally oriented support tubes (3), said support tubes bearing upright posts (8) onto which a respective spool (9) can be located.

7. System according to claim 6, wherein the support tubes (3) are generally parallel and/or aligned, said support tubes (3) being interconnected by regularly spaced transverse tubes (4).

8. System according to any of claims 5-7, wherein the floatable body (1) comprises floating tubes (7) each having a floating chamber for providing a floating capability.

9. System according to claim 8, wherein the floating capability of the floating tubes (7) is controllable in such a way that the height of the floatable body (1) with respect to the surface (15) of the body of water (18) can be regulated.

10. System according to claim 8 or 9, wherein the floating tubes (7) are fillable with water.

11. System according to claim 9 or 10, wherein control means are provided for controlling the floating capability of the floating tubes (7).

12. System according to claim 11, wherein the control means comprises valves and pumps for introducing and/or removing water from the floating chambers of the floating tubes (7).

13. System according to any of claims 8-12, wherein the floating tubes (7) are assembled into a rectangular or square frame (20).

14. System according to claim 13, wherein the floating tubes (7) are at the top of the floating body (1).

15. System according to claim 13 or 14, wherein two rectangular or square frames (20) on top of each other are provided.

16. System according to any of the preceding claims, wherein the bendable elongate member comprises a rope or wire (12).

17. Submersible floatable body (1) for a system according to any of the preceding claims, comprising supporting means (3, 8) for holding a spool (9), said spool (9) being provided with a bendable elongate member (12).

18. Submersible floatable body (1) according to claim 17, wherein the supporting means comprise upright posts (8).
